# EUROPÄISCHE PATENTSCHRIFT

(11) **EP 1 862 789 B1**
(45) Veröffentlichungstag und Bekanntmachung des Hinweises auf die Patenterteilung: **24.12.2008**
(21) Anmeldenummer: 06114835.9
(22) Anmeldetag: 01.06.2006
(51) Int. Cl.: G01M 13/02

(54) **Vorrichtung und Verfahren zum kombinierten Prüfen von Zahnrädern**
Device and method for combined testing of gear wheels
Dispositif et procédé destinés à la vérification combinée de roues dentées

(43) Veröffentlichungstag der Anmeldung: 05.12.2007
(73) Patentinhaber: Klingelnberg AG, 8023 Zürich (CH)
(72) Erfinder: Landvogt, Alexander, 8307, Effretikon (CH); Pahud, Christian, 8057, Zürich (CH); Müller, Hartmuth, 42857 Remscheid (DE)
(74) Vertreter: OK pat AG

(56) Entgegenhaltungen:
- EP-A- 1 241 462
- "DER CNC-KEGELRADTESTER" OERLIKON, 5. Juli 1996 (1996-07-05), Seiten A,2-15,B, XP000672085
- STADTFELD H J: "EIN NEUES VERFAHREN ZUR KEGELRAD-PRUEFUNG UND -OPTIMIERUNG" VDI Z, SPRINGER VDI VERLAG, DUSSELDORF, DE, Bd. 133, Nr. 6, 1. Juni 1991 (1991-06-01), Seiten 176-177, XP000237557 ISSN: 0042-1766
- BAUSSMANN U ET AL: "DETEKTIERUNG UND MARKIERUNG VON FEHLERHAFTEN ZAHNRAEDERN IN DER FERTIGUNG" ANTRIEBSTECHNIK, VEREINIGTE FACHVERLAGE, MAINZ, DE, Bd. 39, Nr. 5, Mai 2000 (2000-05), Seite 52,55, XP000937174 ISSN: 0722-8546

## Beschreibung

Die Erfindung betrifft Vorrichtungen und entsprechende Verfahren zum Prüfen von Zahnradpaaren.

### Stand der Technik

Zahnräder kommen in vielen verschiedenen technischen Gebieten zur Anwendung. Dabei greift üblicherweise ein erstes Zahnrad in ein zweites Zahnrad ein. Um ein gewünschtes Laufverhalten zu gewährleisten, ist es wichtig, die beiden Zahnräder beim Einbau in einer geeigneten Art und Weise in einem räumlichen Koordinatensystem zueinander in Bezug zu bringen.

Das Laufverhalten von Zahnrädern und Zahnradpaarungen wird im Wesentlichen durch die Auslegung bestimmt. Durch die bei der Verzahnungsherstellung auftretenden Fertigungsfehler ergeben sich Abweichungen zwischen der Soll-Geometrie und der realen Geometrie der Zahnräder, was in der Regel eine Veränderung des Laufverhaltens zur Folge hat.

Die Fertigungsfehler beeinflussen unter anderem die Tragfähigkeit, Laufruhe, Austauschbarkeit von Zahnrädern und sie stören die Gleichförmigkeit der Bewegungsübertragung.

Es gibt Prüfverfahren, um Zahnräder oder Zahnradpaare zu testen. Dabei unterscheidet man grundsätzlich zwei Arten von Mess- und Prüfverfahren; die Einzelfehlerprüfung und die Summenfehlerprüfung (auch Sammelfehlerprüfung genannt).

Zu den Einzelfehlerprüfverfahren gehört zum Beispiel die Messung der Verzahnungsgeometrie auf einer 3D-Koordinatenmessmaschine, bei der die Abweichungen zwischen Soll- und Ist-Geometrie z.B. in Mikrometern bestimmt werden. Diese Abweichungen werden dann entweder direkt als Soll-Ist-Differenz einzelner Punkte ausgegeben oder in Form von berechneten Kennwerten dargestellt, wie z.B. einer Flankenlinienwinkelabweichung.

Nachteilig bei der Einzelfehlerprüfung ist, dass dabei das Zusammenspiel der Einzelabweichungen zweier gepaarter Zahnräder und deren Einfluss auf das Laufverhalten nur unzureichend beurteilt werden kann. Da es für die Qualitätsbeurteilung der Zahnräder und Zahnradpaarungen schlussendlich jedoch entscheidend ist, dass die geforderte Laufruhe und Lebensdauer erreicht wird, werden neben der Einzelfehlermessung auch Summenfehlerprüfverfahren eingesetzt, die eine solche Beurteilung erlauben.

Im Bereich der Kegelradfertigung hat sich hierzu in den letzten Jahren die sogenannte Einflankenwälzprüfung (EWP) weitestgehend etabliert. Bei der Einflankenwälzprüfung werden Rad und Gegenrad im Einflankenkontakt quasistatisch miteinander abgewälzt und dabei die Einflankenwälzabweichung, respektive die Schwankung des Übersetzungsverhältnisses ermittelt. Die Prüfdrehzahl liegt in der Regel in einem Bereich von 30 bis 200 Upm, um dynamische Effekte auszuschliessen. Das Prüfmoment wird so gewählt, dass die Anlage der Zahnflanken gewährleistet ist.

Die Schwankung des Übersetzungsverhältnisses resultiert aus dem Design der Verzahnung und aus Fertigungs- und Einbaulageabweichungen. Als Folge der Übersetzungsschwankung kommt es zu Schwingungs- und Geräuschanregungen. Aus der EWP können Rückschlüsse auf das Laufverhalten der Zahnradpaarung getroffen werden.

Die EWP kann entweder als Messung an definierten Einbaupositionen oder als Messung während einer kontinuierlichen Veränderung der Einbauposition durchgeführt werden.

Bei der EWP an einer definierten Einbaulage wird das Radsatzlaufverhalten für genau diese Einbauposition geprüft und beurteilt. Da die Einbaulage des Radsatzes im Getriebe durch geometrische Fehler des Getriebegehäuses und/oder durch lastbedingte Deformationen von der Soll-Einbaulage abweicht, kommt es zu Veränderungen der Kontaktverhältnisse im Zahneingriff. Dies bedeutet, dass sich die Zahnflanken beim Abwälzen des Radsatzes an einer anderen Stelle berühren als beim Abwälzen auf dem Prüfstand, was zu einer Veränderung der Übersetzungsschwankung und damit des Laufverhaltens führt. Um diese sogenannte Verlagerungsempfindlichkeit des Radsatzes zu prüfen, ist es daher allgemein üblich, dass die EWP nicht nur an einer, sondern an mehreren Einbaupositionen durchgeführt wird.

Da eine solche EWP-Messung an mehreren Positionen je nach Anzahl der Messpunkte relativ lange dauern kann, besteht bei modernen Laufprüfmaschinen ausserdem die Möglichkeit eine kontinuierliche Messung durchzuführen. Bei dem kontinuierlichen Verfahren wird parallel zur Messwerterfassung die Einbaulage der Zahnradpaarung kontinuierlich verändert. Details zu einer kontinuierlichen EWP sind der Patentanmeldung mit der Publikationsnummer EP 1 241 462 A1 zu entnehmen.

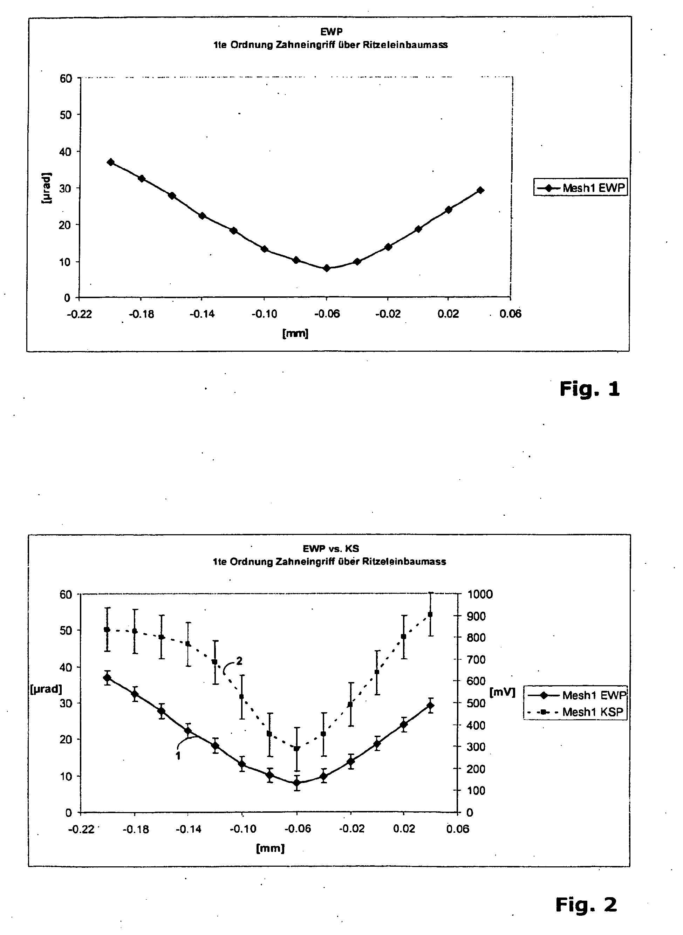

Nebst der Überprüfung der Verlagerungsempfindlichkeit kann die Veränderung der Radsatz-Einbauposition aber auch dazu genutzt werden, um fertigungsbedingte Abweichungen der Verzahnungsgeometrie und deren Auswirkung auf das Laufverhalten zu kompensieren. Bei der Montage von Kegelradgetrieben hat man in der Regel die Möglichkeit, das Einbaumass des Ritzels in bestimmten Grenzen zu verändern. Daher wird die EWP in der industriellen Praxis häufig an mehreren verschiedenen Ritzeleinbaupositionen durchgeführt und darauf basierend das Einbaumass für die anschliessende Montage ermittelt, an der der Radsatz am ruhigsten läuft. Als Kriterium für die Bestimmung der laufruhigsten Position wird zum Beispiel die erste Ordnung des über einen Zahneingriff gemittelten Verlaufs des kurzwelligen Anteils der Wälzabweichung ausgewertet, wie in Fig. 1 gezeigt. Die Einbauposition der beiden miteinander gepaarten Zahnräder ist auf der horizontalen Achse in mm angegeben und die Wälzabweichung auf der vertikalen Achse in µrad (Mikroradiant).

Das optimale Ritzeleinbaumass - auch Best Fit genannt - ist die (Einbau-)Position, an der dieser Kennwert sein Minimum erzielt. In dem gezeigten Beispiel aus Fig. 1 wäre dies die (Einbau-)Position bei -0.06 mm.

Neben der EWP wird in der Industrie die Körperschallprüfung (KSP) zur Qualitätsüberwachung des Laufverhaltens eingesetzt. Am häufigsten wird eine Ordnungsanalyse des Körperschallsignals durchgeführt, um so einen genauen Aufschluss über die Ursachen der Geräuschanregung zu erhalten. Die KSP kann ebenso wie die EWP entweder sequentiell oder kontinuierlich an mehreren Einbaupositionen erfolgen. Die Prüfdrehzahl liegt im Allgemeinen deutlich über der der EWP bei mehreren 100 Upm. Details zu einer kontinuierlichen KSP sind der bereits genannten Patentanmeldung mit der Publikationsnummer EP 1 241 462 A1 zu entnehmen.

Neben der Körperschallprüfung ist auch die sogenannte Drehbeschleunigungsmessung als ebenfalls schnelle und qualitative Prüfmöglichkeit bekannt. Die Drehbeschleunigungsmessung basiert ebenfalls auf einer Messung des Körperschalls, respektive der Beschleunigung. Im Gegensatz zur normalen KSP, bei welcher der Sensor an irgendeiner Stelle der Spindel montiert ist, sind bei der Drehbeschleunigungsmessung die Körperschall-Sensoren tangential an der Ritzel- und Radwelle montiert und rotieren während der Prüfung mit den Spindeln. Die Signalübertragung erfolgt mittels Telemetrie.

Stellt man die Vor- und Nachteile der EWP und der KSP (respektive der Drehbeschleunigungsmessung) gegenüber, so lassen sich folgende Kernaussagen treffen. Die EWP ist aufgrund der quasistatischen Prüfparameter ein Prüfverfahren, dessen Ergebnisse sehr gut reproduzierbar sind, die Messdauer allerdings eher relativ lang ist. Im Rahmen von Wiederholbarkeitstests hat sich gezeigt, dass die Streuung der ersten Ordnung des Zahneingriffes unter 2 Mikroradiant liegt.

Im Gegensatz zur EWP handelt es sich bei der KSP (respektive der Drehbeschleunigungsmessung) um ein dynamisches Prüfverfahren, welches von seiner Prüfdauer wesentlich kürzer als die EWP ist. Dieser Vorteil steht jedoch einer mangelnden Reproduzierbarkeit des Prüfverfahrens gegenüber. Ursache hierfür ist, dass die Ergebnisse der KSP (respektive der Drehbeschleunigungsmessung) nicht nur von den Eigenschaften des Radsatzes, sondern auch von den Spannmitteln und den Schwingungseigenschaften der Prüf- oder Messmaschine abhängen. Ein weiterer Nachteil der KSP (respektive der Drehbeschleunigungsmessung) wird darin gesehen, dass die KSP (respektive die Drehbeschleunigungsmessung) abhängig ist von der aktuellen Einspannung der Zahnradpaare und dass man häufig auf verschiedenen Messgeräten verschiedene Ergebnisse für ein und dasselbe Radpaar bekommt.

Im Hinblick auf eine prozesssichere Qualitätsprüfung liegen die Vorteile somit eindeutig auf Seiten der EWP. Leider ist EWP aber, wie erwähnt, relativ zeitaufwendig.

Um sicherzustellen, dass in der Getriebemontage nur Zahnräder und Zahnradpaarungen verbaut werden, die den Vorgaben, zum Beispiel in Bezug auf die Laufruhe, entsprechen, ist eine entsprechende Überwachung der Fertigungsqualität erforderlich. Die bisher bekannten Verfahren sind aber entweder zu ungenau und liefern keine reproduzierbaren Ergebnisse, oder sie sind zeitaufwendig und sind daher für einen Einsatz in der Fertigung nur bedingt geeignet.

Es stellt sich daher die Aufgabe, einen Messansatz zu entwickeln, der eine schnellere und zuverlässigere Ermittlung der geeigneten Einbaulage von Radsatzpaaren oder eine schnelle und zuverlässige Qualitätsprüfung von Radsatzpaaren ermöglicht.

Es ist eine weitere Aufgabe der vorliegenden Erfindung, ein Messsystem bereit zu stellen, das für die schnelle und zuverlässige Ermittlung der geeigneten Einbaulage von Radsatzpaaren oder für die schnelle und zuverlässige Qualitätsprüfung von Radsatzpaaren geeignet ist.

Es ist eine weitere Aufgabe der Erfindung, ein Verfahren, eine Vorrichtung, eine Auswerteeinheit und ein Softwaremodul bereit zu stellen, das/die geeignet ist/sind, um möglichst schnell und zuverlässig eine geeignete Einbaulage für den Einbau von Radsatzpaaren zu ermitteln.

Es ist eine weitere Aufgabe der Erfindung, ein Verfahren, eine Vorrichtung, eine Auswerteeinheit und ein Softwaremodul bereit zu stellen, das/die geeignet ist/sind, um möglichst schnell und zuverlässig eine Qualitätsprüfung von Radsatzpaaren durchführen zu können.

Die Aufgabe wird erfindungsgemäss durch eine Vorrichtung gemäss Patentanspruch 8 und ein Verfahren gemäss Patentanspruch 1 gelöst.

Weitere vorteilhafte Ausführungsformen sind den abhängigen Patentansprüchen zu entnehmen.

### ZEICHNUNGEN

Ausführungsbeispiele der Erfindung werden im Folgenden unter Bezugnahme auf die Zeichnungen näher beschrieben. Es zeigen:
- FIG. 1: ein beispielhaftes Diagramm, das den Verlauf des kurzwelligen Anteils der Wälzabweichung darstellt, die mittels einer EWP ermittelt wurde;
- FIG. 2: ein weiteres beispielhaftes Diagramm, das den Verlauf des kurzwelligen Anteils der EWP-Wälzabweichung und den Verlauf eines mittels KSP gemessenen Polygonenzugs darstellt;
- FIG. 3A: ein beispielhaftes Diagramm, das einen ersten Schritt eines erfindungsgemässen Verfahrens illustriert;
- **FIG. 3B**: ein beispielhaftes Diagramm, das einen zweiten Schritt des erfindungsgemässen Verfahrens illustriert;
- **FIG. 4A**: ein beispielhaftes Diagramm, das einen ersten Schritt eines weiteren erfindungsgemässen Verfahrens illustriert;
- **FIG. 4B**: ein beispielhaftes Diagramm, das einen zweiten Schritt des weiteren erfindungsgemässen Verfahrens illustriert;
- **FIG. 5**: ein beispielhaftes, schematisch dargestelltes System, gemäss der vorliegenden Erfindung;
- **FIG. 6**: einen Teilaspekt eines Systems, gemäss der vorliegenden Erfindung.

### Detaillierte Beschreibung

Der Einfachheit halber ist in der vorliegenden Beschreibung hauptsächlich von Radsätzen und Radsatzpaaren die Rede. Der Begriff Radsatz wird in der Beschreibung als Oberbegriff für jegliche Arten von Zahnrädern, wie zum Beispiel Stirnräder, Kegelräder (z.B. Spiralkegelräder), Tellerräder, Ritzel usw. verwendet. Die vorliegende Erfindung ist besonders für das Testen von achsverschobenen und nicht-achsverschobenen Kegelradgetrieben geeignet, kann aber auch für alle andere Arten von Zahnrädern angewendet werden. Es ist dabei unerheblich, ob es sich um innenverzahnte oder außenverzahnte Zahnräder handelt, oder ob die Zahnräder gerad-, schräg-.oder bogenförmig verzahnt sind.

Die Erfindung lässt sich aber nicht nur auf Radsätze anwenden, sondern kann auch bei Zahnradpaarungen (z.B. eine Zahnradpaarung als Kombination "Rad gegen Meisterrad" oder "Ritzel gegen Meisterrad") zur Anwendung kommen.

In der vorliegenden Beschreibung ist mehrfach von der geeigneten Positionierung eines Radsatzpaares (z.B. zweier Zahnräder eines Getriebes) oder einer Zahnradpaarung (z.B. Rad gegen Meisterrad) die Rede. Es sei angemerkt, dass die geeignete Positionierung von verschiedenen Vorgaben abhängen kann. Handelt es sich um ein Kegelradgetriebe, das z.B. für den Einbau in einen LKW bestimmt ist, so kommen andere Kriterien bei der Beurteilung zur Anwendung als bei einem Kegelradgetriebe für den Einbau in einen Kleinwagen. Darüber hinaus hat jeder Anwender andere Vorgaben bzw. Definitionen, die bei der Ermittlung der geeigneten Positionierung von Radsatzpaaren bzw. bei der Qualitätsprüfung derselben zur Anwendung kommen. Wiederum andere Kriterien können eine Rolle spielen, wenn ein Rad gegen Meisterrad oder ein Ritzel gegen Meisterrad geprüft werden sollen.

In der vorliegenden Beschreibung ist mehrfach von der Körperschallprüfung die Rede. Dabei soll der Begriff Körperschallprüfung sowohl die normale Körperschallprüfung, d.h. die Prüfung, bei welcher der KörperschallSensor an irgend einer Stelle der Spindel montiert ist, als auch die eingangs erwähnte Drehbeschleunigungsmessung abdecken. Mit anderen Worten ausgedrückt, wird die Drehbeschleunigungsmessung als schnelle und qualitative Alternative zur normalen KSP angesehen und kann dementsprechend auch als Alternative im Zusammenhang mit der vorliegenden Erfindung eingesetzt werden.

Eine geeignete Einbaulage (best-fit) kann zum Beispiel dann vorliegen, wenn der Körperschall am geringsten ist, wobei ein geringer Körperschall normalerweise eine gute Laufruhe gewährleistet. Andere Einsatzgebiete diktieren eventuell andere Vorgaben was die geeignete Einbaulage angeht. So kann zum Beispiel die Betriebssicherheit ein wichtiges Kriterium bei der Definition der geeigneten Einbaulage sein.

Bei der Wälzprüfung werden, wie eingangs beschrieben, Verzahnungen mit Gegenverzahnungen gepaart und die gemeinsamen Auswirkungen ihrer Einzelabweichungen auf den Wälzvorgang als Wälzabweichungen ermittelt. Bei der Einflanken-Wälzprüfung befinden sich zwei Zahnräder bei konstantem Achsabstand a im Eingriff. Es berühren sich ständig die Linksflanken oder die Rechtsflanken. Eine Bremse am Abtrieb oder ein Antrieb, der ein negatives Drehmoment erzeugt, gewährleistet jederzeit ein Anliegen der Zahnflanken. Man braucht für das Messen eines Zahnradpaares mindestens 1 Umdrehung des Zahnrades mit der grössten Zähnezahl der Paarung und kann nur mit geringen Drehzahlen arbeiten. Das heisst, eine solche EWP ist relativ zeitaufwendig. Bisher hat man aber vor der Getriebemontage trotzdem eine EWP durchführen müssen, um die am besten geeignete Einbauposition (best-fit) zu ermitteln.

Die vorliegende Erfindung basiert nun auf der folgenden Erkenntnis. Vergleicht man die Messergebnisse einer kontinuierlichen EWP mit denen einer kontinuierlichen KSP (oder einer Drehbeschleunigungsmessung), so können interessanterweise gewisse Übereinstimmungen festgestellt werden, wie anhand von Fig. 2 zu erkennen ist. Diese Übereinstimmungen werden jedoch nur bei einer geeigneten Durchführung der Messungen und einer geeigneten grafischen Darstellung der Messergebnisse sichtbar. In Fig. 2 ist das Messergebnis der EWP als durchgezogener Linienzug 1 und das Messergebnis der KSP als gestrichelter Linienzug 2 in einem Diagramm eingezeichnet. Beide Messungen wurden am selben Zahnradpaar auf einer Messmaschine durchgeführt, die sowohl für die KSP als auch für die EWP ausgelegt ist. Die Einbauposition der beiden miteinander gepaarten Zahnräder ist auf der horizontalen Achse in mm angegeben und die Wälzabweichung der EWP Messung auf der vertikalen Achse in µrad (Mikroradiant). Im gezeigten Beispiel ist die horizontale Achse in 0,02mm Schritte unterteilt, da beim späteren Einbau der Zahnräder 0,02mm dicke Unterlegscheiben, oder Abstandsscheiben zum Einsatz kommen werden. Neben den EWP und KSP Messpunkten ist in der Darstellung auch der Streubereich für die einzelnen Messpunkte mittels vertikaler Balken eingezeichnet. Die Streuung liegt bei einem EWP-Wiederholbarkeitstest bei ca. 2 µrad (Mikroradiant). Die Ergebnisse der Körperschallprüfung hingegen streuen häufig um 100 mV und mehr, wie in Fig. 2 gezeigt ist. Die Darstellung des Körperschalls in Form von mV ist zwar physikalisch nicht korrekt und müsste als Beschleunigungswert (als Bruchteil der Erdbeschleunigung g) angegeben werden; in der industriellen Praxis verzichtet man jedoch in der Regel auf eine entsprechende Kalibrierung des Messsignals und gibt die Ergebnisse direkt als gemessene Spannung aus. Anstatt mV oder g zur Darstellung des Körperschalls zu verwenden, kann auch ein sogenannter Qualitätsfaktor (auch Q-Wert genannt) verwendet werden. Die Q-Werte können mittels eines formalen Zusammenhangs und vom Anwender wählbaren Gewichtungsfaktoren von einer Software ermittelt werden.

Trotz der grossen Streuung der KSP-Ergebnisse ist anhand der speziellen in Fig. 2 gezeigten Darstellung zu erkennen, dass der qualitative Verlauf von EWP-Linienzug 1 und KSP-Linienzug 2 recht gut übereinstimmen. Das Minimum der ersten Ordnung des Zahneingriffes liegt in beiden Fällen bei der relativen Ritzeleinbauposition -0.06 mm.

Diese Erkenntnis wird nun gemäss Erfindung verwendet, um neue Testverfahren und entsprechende Vorrichtungen bereit zu stellen. Es wurde von den Erfindern, um die Vorteile beider Verfahren miteinander zu verbinden, ohne deren Nachteile in Kauf nehmen zu müssen, ein kombinierter Ansatz entwickelt, der im Folgenden anhand von Beispielen erläutert werden soll.

Es wird gemäss Erfindung einerseits von dem relativ kurzen Messzyklus (im Sinne von Zeitdauer) einer KSP und andererseits von der quantitativen Genauigkeit der EWP Gebrauch gemacht.

Gemäss Erfindung wird nach der Produktion, oder vor dem Einbau, von Tellerrädern und Ritzeln einer bestimmten Auslegung eine Körperschallanalyse zur Suche des optimalen Einbaumaßes bezüglich der Geräuschemission durchgeführt (dieser Vorgang wird hierin auch als Suchlauf bezeichnet). Dann erfolgt in einem nachgeschalteten Schritt eine EWP, wobei diese EWP entweder in einem engen Fenster ausgeführt wird, das mittels der KSP gefunden wurde, oder nur an der einen durch KSP ermittelten spezifischen Einbauposition erfolgt. Bei der Einflankenwälzprüfung handelt es sich um eine absolute Meßmethode, die genauere quantitative Aussagen zulässt als die KSP.

Es wird also mit anderen Worten ausgedrückt erst ein Suchlauf zum Ermitteln einer geeigneten Einbauposition (hier spezifische Einbauposition genannt) anhand eines qualitativ arbeitenden KSP gemacht und dann eine quantitative EWP an nur einem Punkt (spezifische Einbauposition) oder in einem kleinen Bereich, der diesen Punkt umfasst, durchgeführt.

In einer bevorzugten Implementierung der Erfindung, werden bei der KSP auch andere Kriterien berücksichtigt. Zeigt zum Beispiel der ermittelte Polygonenzug keinen Verlauf, der dem in Fig. 2 gezeigten Verlauf ähnlich ist, so kann davon ausgegangen werden, dass andere Probleme (wie zum Beispiel Instabilität) vorliegen und das Radpaar zur Paarung ungeeignet ist. In diesem Fall wird der Suchlauf unterbrochen und das Radpaar wird nicht zum Einbau zugelassen.

Es liegt auf der Hand, dass nur diejenigen Radsätze als Paar verbaut werden, die den neuartigen Prüfprozess erfolgreich durchlaufen haben.

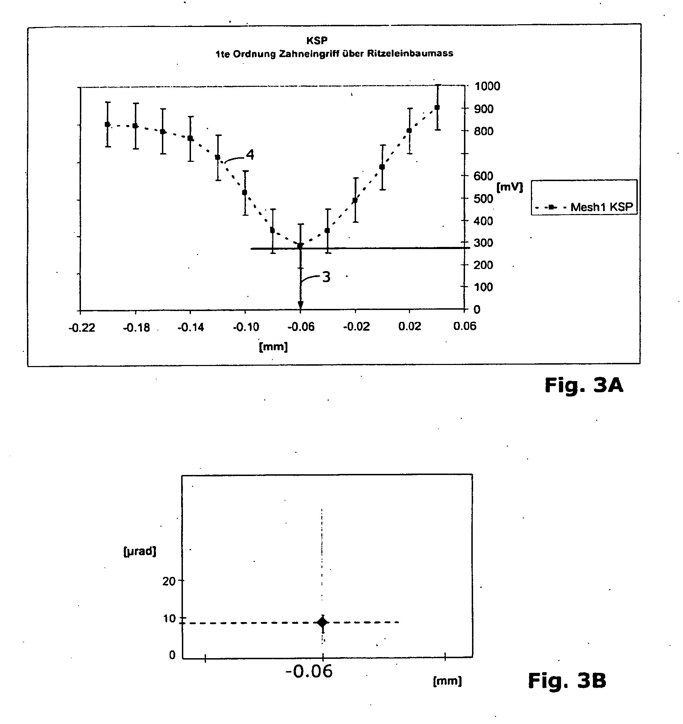

Ein erfindungsgemässes Verfahren wird im Folgenden anhand der Figuren 3A und 3B weiter erläutert. In diesen beiden Figuren wird das Verfahren zum Prüfen des Laufverhaltens der Zahnräder eines Zahnradpaars beschrieben, In einem ersten Schritt wird anhand eines Körperschallsensors eine (qualitative) Körperschallprüfung (oder Drehbeschleunigungsmessung) bei verschiedenen fest vorgegebenen Einbaupositionen der Zahnräder durchgeführt. Während dieser Körperschallprüfung rotieren die Zahnräder bei einer Drehzahl von zum Beispiel 1000 Upm. Es werden entweder verschiedene diskrete Einbaupositionen (z.B. als Ritzeleinbaumass in 0,02mm Schritten) eingestellt, um dort jeweils den Körperschall zu messen, oder es wird ein Bereich kontinuierlich durchfahren während der Körperschall gemessen wird. Es werden z.B. Wertepaare aufgezeichnet, um eine Zuordnung (Korrelation) der aus dem Körperschall ermittelten Messergebnisse zur jeweiligen Einbauposition zu erlauben. Im vorliegenden Beispiel wird als Köperschallkriterium festgelegt, dass das absolute Minimum des Körperschalls zu ermitteln ist. Zu diesem Zweck werden die Wertepaare verglichen, um den kleinsten Körperschallwert zu ermitteln, oder es wird die Steigung der Kurve 4 ermittelt und durch Ermitteln des Nullpunkts das Minimum gefunden. Wie durch einen senkrecht nach unten weisenden Pfeil 3 in Fig. 3A angedeutet, wird im Minimum die zugehörige Einbauposition ermittelt. Diese Einbauposition wird auch als spezifische Einbauposition bezeichnet. Die spezifische Einbauposition (best-fit Position) liegt bei -0.06mm.

Nun wird vorzugsweise auf demselben Messsystem oder -gerät mittels einer Drehzahlsensorik eine Einflankenwälzprüfung durchgeführt. Dies geschieht gemäss Erfindung genau an der spezifischen Einbauposition der Zahnräder, d.h. im vorliegenden Beispiel genau bei -0.06mm. In Fig. 3B ist das Ergebnis einer solchen lokalen Einflankenwälzprüfung gezeigt. Die EWP ergibt einen Messwert von ca. 8µrad. Dieser Messwert erlaubt eine quantitative Aussage der Einflankenwälzprüfung. Dabei kann ein sogenanntes Einflankenwälzkriterium zur Anwendung kommen. Im vorliegenden Beispiel wird als Einflankenwälzkriterium festgelegt, dass der Messwert der EWP kleiner sein muss als 10µrad. Zu diesem Zweck wird der Messwert mit dem Einflankenwälzkriterium verglichen, um die Einhaltung des Einflankenwälzkriteriums zu bestimmen. Bei einer anderen Ausführungsform kann zum Beispiel die Steigung einer Messkurve ermittelt und durch Ermitteln des Nullpunkts das Minimum gefunden werden. Die so gefundene Einbauposition wird auch als ideale Einbauposition bezeichnet. Die ideale Einbauposition liegt bei -0.06mm.

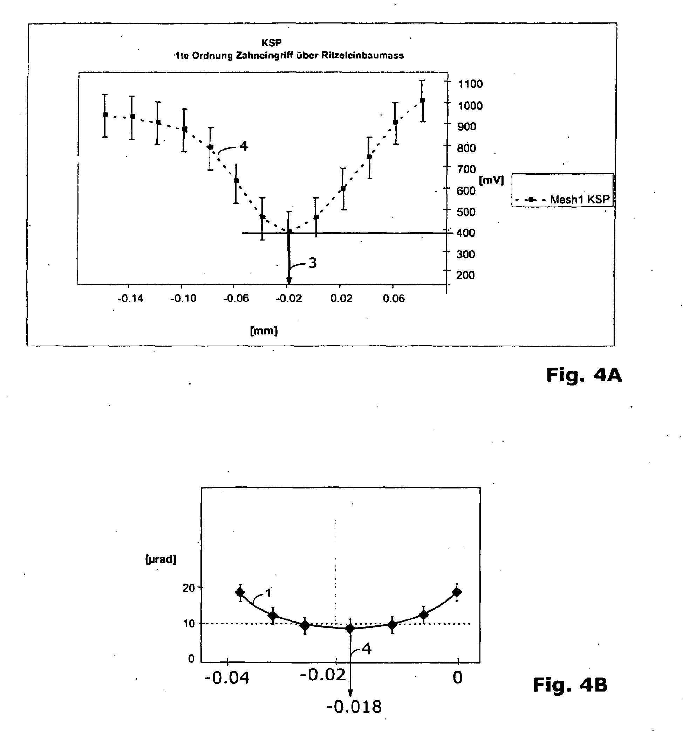

Ein etwas modifiziertes, erfindungsgemässes Verfahren wird im Folgenden anhand der Figuren 4A und 4B erläutert. In einem ersten Schritt wird anhand eines Körperschallsensors eine Körperschallprüfung bei verschiedenen Einbaupositionen der Zahnräder durchgeführt. Während dieser Körperschallprüfung rotieren die Zahnräder bei einer Drehzahl von zum Beispiel 800 Upm. Es werden entweder verschiedene diskrete Einbaupositionen eingestellt, um dort jeweils den Körperschall zu messen, oder es wird ein Bereich kontinuierlich durchfahren während der Körperschall gemessen wird. Es werden z.B. Wertepaare aufgezeichnet, um eine Zuordnung der Messergebnisse zur jeweiligen Einbauposition zu erlauben. Im vorliegenden Beispiel wird als Köperschallkriterium festgelegt, dass das absolute Minimum des Körperschalls zu ermitteln ist. Zu diesem Zweck werden die Wertepaare verglichen, um den kleinsten Körperschallwert zu ermitteln, oder es wird die Steigung der Kurve ermittelt und durch Ermitteln des Nullpunkts das Minimum gefunden. Wie durch einen senkrecht nach unten weisenden Pfeil 3 in Fig. 4A angedeutet, wird im Minimum die zugehörige Einbauposition ermittelt. Diese spezifische Einbauposition liegt im gezeigten Beispiel bei -0.02mm.

Nun wird vorzugsweise auf demselben Messsystem oder -gerät mittels einer Drehzahlsensorik eine Einflankenwälzprüfung durchgeführt. Dies geschieht gemäss Erfindung im Bereich der spezifischen Einbauposition der Zahnräder. In Fig. 4B ist das Ergebnis einer solchen lokalen Einflankenwälzprüfung gezeigt. Die EWP wurde auf einen kleinen Bereich rechts und links der spezifischen Einbauposition beschränkt. Es folgt nun eine quantitative Auswertung der Messergebnisse (bzw. der Kurve 1) der Einflankenwälzprüfung. Dabei kommt das Einflankenwälzkriterium zur Anwendung. Im vorliegenden Beispiel wird als Einflankenwälzkriterium festgelegt, dass das absolute Minimum der Messergebnisse (bzw. der Kurve 1) der EWP zu ermitteln ist. Zu diesem Zweck werden die Werte verglichen, um den kleinsten Messwert zu ermitteln, oder es wird die Steigung der Kurve 1 ermittelt und durch Ermitteln des Nullpunkts das Minimum gefunden. Wie durch einen senkrecht nach unten weisenden Pfeil 4 in Fig. 4B angedeutet, wird im Minimum die zugehörige Einbauposition ermittelt. Diese Einbauposition wird auch als ideale Einbauposition bezeichnet. Die ideale Einbauposition liegt bei -0.018mm. Gleichzeitig kann z.B. optional geprüft werden, ob der absolute Messwert in µrad unterhalb der 10µrad (Vorgabe) liegt.

Falls die so ermittelte ideale Einbauposition nicht ein Element der Menge aus fest vorgegebenen Einbaupositionen ist, kann die am nächsten liegende Einbauposition zur Anwendung kommen. In diesem Fall umfasst die Menge der fest vorgegebenen Einbaupositionen folgende Werte: 0,06mm; 0,04mm; 0,02mm; 0mm, -002mm; -0,04mm, -0,06mm. Da -0.018mm näher bei -0,02mm liegt als bei 0mm, wird der Wert -0,02mm als Einbauposition gewählt.

In diesem Beispiel konnte also die ideale Einbauposition genauer ermittelt werden als dies mit einer reinen KSP oder Drehbeschleunigungsmessung möglich gewesen wäre, ohne jedoch zu viel Zeit für die genaue Messung zu verlieren.

Das Einflankenwälzkriterium kann eingesetzt werden, um zu ermitteln ob das Laufverhalten des soeben geprüften Zahnradpaars den (z.B. vom Hersteller) vorgegebenen Anforderungen (Vorgaben) entspricht.

In einer weiteren bevorzugten Ausführungsform gibt es eine Art "Zoom-In"-Funktion. Dabei geht man wie folgt vor. Anfänglich wird der Suchlauf mittels des Körperschallsensors 20 an diskreten Einbaupositionen durchgeführt und es werden die Messergebnisse der Körperschallprüfung umgehend (on-thefly) ausgewertet, um eine Annäherung an das Körperschallkriterium festzustellen. Ab der so ermittelten Einbauposition findet dann ein Übergang von einer diskreten Körperschallmessung (oder Drehbeschleunigungsmessung) zu einer kontinuierlichen Körperschallmessung (oder Drehbeschleunigungsmessung) statt und es wird im Umfeld um den so gefundenen Punkt eine hochauflösendere, kontinuierliche Körperschallmessung (oder Drehbeschleunigungsmessung) durchgeführt. Erst dann folgt die Einflankenwälzprüfung, wie bereits beschrieben.

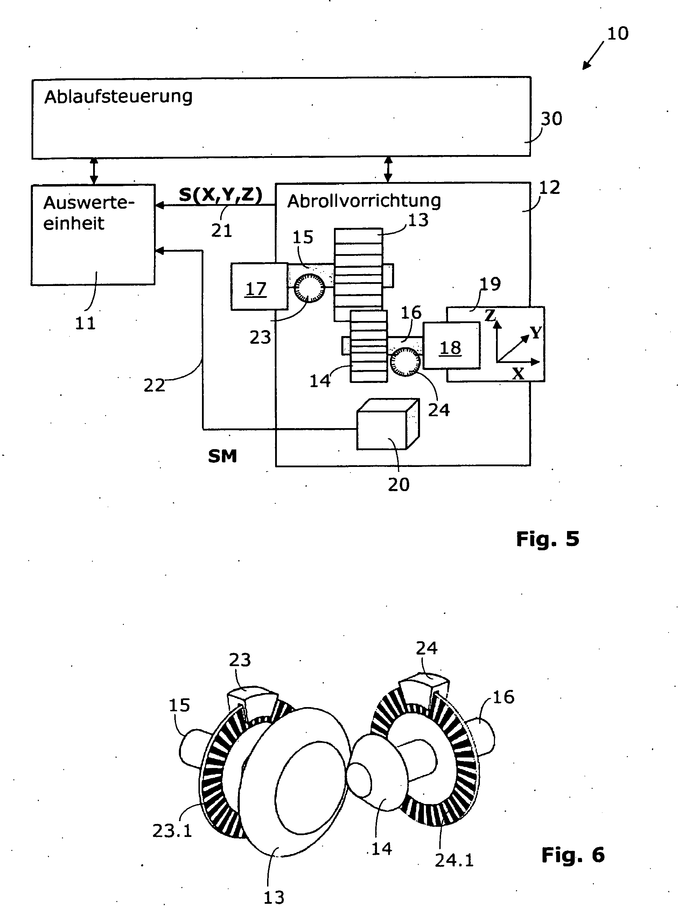

Ein erstes Ausführungsbeispiel der vorliegenden Erfindung wird anhand der schematischen Darstellung in Fig. 5 beschrieben. In dieser Figur ist ein Messsystem 10 oder -gerät gezeigt, das im Wesentlichen eine Auswerteeinheit 11, eine Abrollvorrichtung 12 und eine Ablaufsteuerung 30 umfasst. Ein derartiges System 10 kann zum Beispiel zum Testen eines Zahnradpaares 13, 14 eingesetzt werden. Beim erfindungsgemässen Testen wird eine geeignete (vorzugsweise die bestmögliche) Positionierung des ersten Zahnrades 13 in Bezug auf das zweite Zahnrad 14 ermittelt.

Die gezeigte Abrollvorrichtung 12 umfasst eine erste Spindel 15 auf der das erste Zahnrad 13 befestigt werden kann. Die erste Spindel 15 wird von einem Antrieb 17 in eine Rotation um die Spindelachse versetzt. Das zweite Zahnrad 14 sitzt auf einer zweiten Spindel 16. Ein zweiter Antrieb 18 ist an der zweiten Spindel 16 vorgesehen, um die zweite Spindel 16 entweder mit einem positiven (Zugzustand) oder einem negativen Drehmoment (Schubzustand) zu beaufschlagen. Um die beiden Zahnräder 13 und 14 in Eingriff bringen zu können, weist die Abrollvorrichtung eine Positioniereinheit 19 auf, welche dazu eingesetzt werden kann gezielt die Positionierung der beiden Zahnräder 13, 14 gegeneinander zu verändern. Wie grafisch durch das X,Y,Z-Koordinatensystem angedeutet, kann die Positionierung im 3-dimensionalen Raum erfolgen. Üblicherweise wird die Position der beiden Zahnräder 13 und 14 in Bezug zueinander nicht im kartesischen Koordinatensystem, sondern im V,H,J-Koordinatensystem beschrieben.

Da es nicht erfindungswesentlich ist, welches Koordinatensystem zur Beschreibung der Positionen der Zahnräder 13, 14 zur Anwendung kommt, werden im Folgenden hauptsächlich die Begriffe Positionierung und Einbauposition verwendet, die aussagen sollen, dass es letztendlich auf die Position des einen Zahnrades 13 in Bezug auf die Position des anderen Zahnrades 14 ankommt.

Die gezeigte Abrollvorrichtung 12 ist in der Lage, Signale S(X,Y,Z) über eine Kommunikationsverbindung 21 an die Auswerteeinheit 11 zu übermitteln. Die Signale S(X,Y,Z) beschreiben die Positionierung des zu testenden Radsatzpaares. Die Verwendung der Symbole X,Y,Z soll anzeigen, dass auch hier die Positionierung durch die Koordinaten eines Koordinatensystems beschrieben werden kann. Des Weiteren umfasst die Abrollvorrichtung 12 einen Messwertgeber 20, der ein zeitabhängiges Messsignal SM(t) über eine Kommunikationsverbindung 22 an die Auswerteeinheit 11 übermittelt. Vorzugsweise handelt es sich bei der Kommunikationsverbindung 22 um eine Verbindung mittels eines abgeschirmten Kabels. Je nach Ausführungsform der Erfindung kann es sich zum Beispiel um einen aktiven oder einen passiven Körperschallsensor 20 handeln. Ein solcher Körperschallsensor 20 erzeugt ein analoges zeitabhängiges Messsignal SM(t), das über das Geräuschverhalten bzw. die Beschleunigung der beiden Zahnräder 13, 14 Auskunft gibt, während diese gegeneinander abrollen. Der Körperschallsensor 20 misst also das Schwingungs-oder Beschleunigungsverhalten und lässt dadurch eine Aussage über das Verhalten der Prüflinge 13, 14 zu. Das Signal SM(t) des Körperschallsensors 20 ist typischerweise proportional zu den auf ihn einwirkenden Kräften und wird vorzugsweise von einem Messverstärker und/oder anderen Komponenten zur Signalanpassung aufbereitet. Der Verstärker kann entweder der Auswerteeinheit 11 vorgeschaltet oder in diese integriert sein. Wie in Fig. 5 schematisch angedeutet, ist neben dem Messwertgeber 20 an jeder Spindel 15, 16 je ein Drehgeber 23 bzw. 24 vorgesehen. Vorzugsweise handelt es sich dabei um hochauflösende Drehgeber.

Details zur typischen Anordnung zweier Drehgeber 23 und 24 sind der Fig. 6 zu entnehmen, wobei in dieser Figur zwei Kegelräder 13, 14 statt zweier Zylinderräder (siehe Fig. 5) gezeigt sind. Wie in Fig. 6 gezeigt, können die Drehgeber 23, 24 direkt an die Spindeln 15 bzw. 16 angekoppelt werden. Die gezeigten optischen Scheiben 23.1, 24.1 der Drehgeber 23, 24 haben vorzugsweise eine Auflösung von mehreren tausend Impulsen. Die Drehgeber 23, 24 können z.B. die für Impulsgeber typischen Kanäle A1, B1 und A2, B2 zur Zählung von Impulsen und zur Erkennung von Positions- und Drehrichtungen bieten. Die Drehgeber 23, 24 können, wie gezeigt, entweder mechanisch mit den Spindeln 15, 16 verbunden sein oder induktiv bzw. optisch mit diesen gekoppelt sein.

Zusätzlich zu den bisher beschriebenen Komponenten weist das System 10 eine Ablaufsteuerung 30 (vorzugsweise software-basiert) auf, die vorzugsweise die folgenden Schritte auszuführen in der Lage ist:
- Verfahren der Zahnräder 13, 14 gegeneinander, bis sich diese im Eingriff befinden und eine Ausgangsposition (auch Nullposition genannt) erreicht ist.
- Antreiben eines der beiden Zahnräder 13 oder 14, um dieses in eine Rotationsbewegung zu versetzen bei der beide Zahnräder 13, 14 gegeneinander abrollen. Die Zahnräder 13, 14 können dabei mit einer konstanten Drehzahl n (z.B. n= 800 oder 1000 Upm), oder mit einer zeitlich variierenden Drehzahl n(t) angetrieben werden.
- Verfahren der Zahnräder 13, 14 gegeneinander, wobei das Verfahren durch einen Verfahrvektor (1-, 2- oder 3-dimensional) vorgegeben ist. Beim Verfahren der Zahnräder 13, 14 können je nach Ausführungsform der Erfindung entweder mehrere Einbaupositionen als diskrete, fest vorgegebene Positionen angefahren werden, oder es kann ein kontinuierliches Verfahren der Einbauposition vorgenommen werden.
- Durchführen der Körperschallprüfung an verschiedenen diskreten Einbaupositionen oder kontinuierlich, wie beschrieben.
- Dann wird, wie beschrieben, eine spezifische Einbauposition ermittelt (wie im Zusammenhang mit Fig. 3A oder Fig. 4A beschrieben) und es werden die Zahnräder 13, 14 genau bei dieser Einbauposition (wie im Zusammenhang mit Fig. 3B beschrieben) oder in einem Bereich (wie im Zusammenhang mit Fig. 4B beschrieben), der die spezifische Einbauposition umfasst, anhand einer EWP quantitativ ausgemessen. Hierzu werden die Signale der Drehgeber 23, 24 in Relation zur Einbauposition erfasst und ausgewertet.

Die erfindungsgemässe Ablaufsteuerung 30 kann weitere Komponenten, Module oder Softwareroutinen umfassen. Es kann zum Beispiel ein Normierungsmodul oder eine Normierungsroutine vorgesehen sein, um Körperschallmessungen vergleichbar zu machen, die auf verschiedenen Maschinen ermittelt wurden. Zur Normierung verwendet man auch die best-fit Position und verschiebt die KSP-Kurven verschiedener KSP-Messungen bis die vertikale Lage im best-fit Punkt übereinstimmt.

Ein System gemäss der Erfindung erlaubt hochgenaue und reproduzierbare Messungen und Analysen von Radsatzpaaren und Zahnradpaaren. Die Erfindung kann besonders vorteilhaft in der Serienproduktion eingesetzt werden.

Die Erfindung kann auf einer speziell ausgestalteten Laufprüfmaschine oder Messmaschine, z.B. einem CNC-Kegelradtester, implementiert sein. Vorzugsweise wird die Erfindung so implementiert, dass sie für die Serienprüfung von (Automobil-)Radsätzen geeignet ist. Der Anwender einer erfindungsgemässen Maschine kann gewisse Kriterien vorgeben, die ein Radsatz zu erfüllen hat, bevor es zum Einbau gelangt.

Die Erfindung kann aber auch eingesetzt werden, um bei verschiedenen Einbaupositionen eine Beschädigung der Zahnräder eines Radsatzes oder eines Zahnradpaars zu erkennen.

Eine erfindungsgemässe Maschine verfügt vorzugsweise über drei lineare Achsen (in Fig. 5 sind der Einfachheit halber nur 2 Achsen, nämlich die beiden Spindelachsen gezeigt) zur Einstellung der Radsatzeinbaumaße und des Achsversatzes. Optional kann die Maschine mit einer Stellachse zur Veränderung des Achswinkels ausgerüstet sein, um auch Kegelradsätze mit einem von 90° abweichenden Achswinkel prüfen zu können. Der Aufbau der Maschine 10, die Ablaufsteuerung 30 und deren Software sind vorzugsweise so ausgelegt, dass eine vollautomatische Laufprüfung von Zahnradsätzen (z.B. Kegelradsätzen) mittels Körperschallmessung und anschliessender, auf eine anhand der KSP ermittelten spezifische Einbauposition begrenzte Einflankenwälzprüfung unter Serien-Produktionsbedingungen möglich ist. Je nach Ausführungsform der Maschine 10 kann diese kombinierte Messung an definierten Einbaupositionen und/oder kontinuierlich erfolgen.

Vorzugsweise wird durch die Wahl von Prüfdrehmoment, Drehzahl und der verfügbaren, unterschiedlichen Körperschallsignale eine Korrelation zu den bestimmten Getriebe- oder Fahrzeuggeräuschen hergestellt. Eine spezielle Auswertesoftware (zum Beispiel als Teil der Auswerteeinheit 11) ermöglicht es gemäss Erfindung sehr viel schneller und zuverlässiger als bisher eine Aussage über gute bzw. weniger gute Radpaare zu machen. Dies erfolgt, wie beschrieben, vorzugsweise anhand gespeicherter Kriterien.

Im bevorzugten Fall werden KSP-Messläufe über mehrere Ritzeleinbaumaße, z.B. von + 0,6mm bis - 0,6mm durchgeführt, um die Einbauposition, die als bester Kompromiss zwischen Schub- und Zugseite resultiert, zu ermitteln und der nachfolgenden EWP zuzuführen. Die nachfolgende EWP wird dann entweder nur bei der spezifischen Einbauposition durchgeführt, oder es wird eine EWP zum Beispiel in dem Bereich der spezifischen Einbauposition ±0,02mm durchgeführt (siehe Fig. 4B).

Mit der kombinierten KSP und EWP können gemäss Erfindung auch folgende Teile hervorragend beurteilt werden: z.B. Schnecken, Schneckenräder, Kegelräder, Stirnräder, Spinpumpen usw.

Es ist ein Vorteil der Erfindung, dass durch die neuartige Kombination zweier an sich bekannter Verfahren und durch die spezielle Ausführung der beiden Verfahren eine sehr schnelle, reproduzierbare und zuverlässige Messung möglich wird. Damit kann der enorme Kostendruck, der in der Serienproduktion herrscht, gemildert werden ohne schlechtere Paarungen zu erhalten. Im Gegenteil, die Qualität der Messung und die Einschätzung wird deutlich besser, was in der Serienproduktion zu deutlich weniger Ausschuss führt.

In einer bevorzugten Ausführungsform ist die Vorrichtung 10 so ausgelegt, dass sie zum Vermessen/Beurteilen von Getriebezügen mit mehr als zwei Zahnrädern einsetzbar ist. Somit können ganze Getriebezüge vor dem endgültigen Einbau ausgemessen werden.

## Patentansprüche

1. Verfahren zum Prüfen des Laufverhaltens der sich im Eingriff befindenden Zahnräder (13, 14) eines Zahnradpaars oder Radsatzes, wobei während einer Rotation der Zahnräder (13, 14) anhand eines Körperschallsensors (20) eine Körperschallprüfung oder Drehbeschleunigungsmessung bei verschiedenen Einbaupositionen der Zahnräder (13, 14) durchgeführt wird, **dadurch gekennzeichnet, dass**
- eine spezifische Einbauposition aus Messergebnissen der Körperschallprüfung oder Drehbeschleunigungsmessung ermittelt wird, die mindestens ein vorgegebenes Körperschallkriterium in Bezug auf das Laufverhalten erfüllt,
- mittels einer Drehzahlsensorik (23, 24) eine Einflankenwälzprüfung bei der spezifischen Einbauposition der Zahnräder (13, 14) desselben Zahnradpaars durchgeführt wird,
- eine quantitative Auswertung von Messergebnissen der Einflankenwälzprüfung vorgenommen wird, und
- dass unter Verwendung eines Einflankenwälzkriteriums ermittelt wird, ob das Laufverhalten der Zahnräder (13, 14) einer Vorgabe entspricht.

2. Verfahren nach Anspruch 1, **dadurch gekennzeichnet, dass** anhand der Körperschallprüfung oder Drehbeschleunigungsmessung eine geeignete Einbaulage ermittelt wird und dass die Einflankenwälzprüfung nur an dieser Einbaulage durchgeführt wird, um die Einhaltung der Vorgabe festzustellen.

3. Verfahren nach Anspruch 1 oder 2, **dadurch gekennzeichnet, dass** während der mittels des Körperschallsensors (20) ausgeführten Körperschallprüfung oder Drehbeschleunigungsmessung die Einbauposition der Zahnräder (13, 14) kontinuierlich relativ zueinander verändert wird und die Einbauposition sowie Ausgangssignale des Körperschallsensors (20) zeitsynchron erfasst und gespeichert werden, um eine Zuordnung zwischen den Messergebnissen der Körperschallprüfung oder Drehbeschleunigungsmessung und den jeweiligen Einbaupositionen zu ermöglichen.

4. Verfahren nach Anspruch 1 oder 2, **dadurch gekennzeichnet, dass** während der mittels des Körperschallsensors (20) ausgeführten Körperschallprüfung oder Drehbeschleunigungsmessung die Einbauposition der Zahnräder (13, 14) an diskreten Einbaupositionen durchgeführt und die Messergebnisse der Körperschallprüfung oder Drehbeschleunigungsmessung ausgewertet werden, um eine Annäherung an das Körperschallkriterium festzustellen, wobei ab der so ermittelten Einbauposition dann ein Übergang von einer diskreten Körperschallmessung oder Drehbeschleunigungsmessung zu einer kontinuierlichen Körperschallmessung oder Drehbeschleunigungsmessung erfolgt.

5. Verfahren nach einem der Ansprüche 1 bis 4, **dadurch gekennzeichnet, dass** anhand der Einflankenwälzprüfung bei der spezifischen Einbauposition der Zahnräder (13, 14) die Lage der spezifischen Einbauposition genauer ermittelt wird, als dies anhand der Messergebnisse der Körperschallprüfung oder Drehbeschleunigungsmessung möglich war.

6. Verfahren nach einem der Ansprüche 1 bis 5, **dadurch gekennzeichnet, dass** anhand mindestens eines Messergebnisses der Körperschallprüfung oder Drehbeschleunigungsmessung an oder im Bereich der spezifischen Einbauposition ein Normierungsschritt durchgeführt wird, um Messergebnisse von Körperschallprüfungen oder Drehbeschleunigungsmessungen auf verschiedenen Körperschall-Messsystemen oder -geräten vergleichbar zu machen.

7. Verfahren nach einem der Ansprüche 1 bis 6, **dadurch gekennzeichnet, dass** eine Anzahl von Einbaupositionen fest vorgegeben ist und eine Korrelation von Messergebnissen der Körperschallprüfung oder Drehbeschleunigungsmessung und/oder von Messergebnissen der Einflankenwälzprüfung mit den fest vorgegebenen Einbaupositionen erfolgt, um aus der Anzahl von fest vorgegebenen Einbaupositionen die am besten geeignete Einbauposition zu ermitteln.

8. Vorrichtung (10) zur Messung des Laufverhaltens eines Zahnradpaares oder Radsatzes mit einer Abrollvorrichtung (12), die pro Zahnrad (13, 14) eine Spindel (15, 16) umfasst und mindestens einen Antrieb (17; 18) zum Antreiben eines der Zahnräder (13, 14) aufweist, wobei ein Körperschallsensor (20) und eine Ablaufsteuerung (30) vorgesehen sind, **dadurch gekennzeichnet, dass** die
Vorrichtung (10) weiterhin eine Drehzahlsensorik (23, 24) umfasst, und dass die Ablaufsteuerung (30) so ausgelegt ist, dass eine kombinierte Prüfung der Zahnräder (13, 14) durchführbar ist, bei der in einem ersten Suchlauf mittels Körperschallprüfung oder Drehbeschleunigungsmessung eine spezifische Einbauposition ermittelt wird und anschliessend bei der spezifischen Einbauposition eine Einflankenwälzprüfung erfolgt.

9. Vorrichtung (10) nach Anspruch 8, **dadurch gekennzeichnet, dass** der Antrieb (17; 18) so ausgelegt ist, dass während der Körperschallprüfung oder Drehbeschleunigungsmessung mindestens eines der Zahnräder (13, 14) mit einer ersten Drehzahl angetrieben wird und, dass während der Einflankenwälzprüfung mindestens eines der Zahnräder (13, 14) mit einer zweiten Drehzahl angetrieben wird, wobei die zweite Drehzahl im Bereich von 10 bis 1000 Upm, vorzugsweise 30 bis 200 Upm, liegt, und die erste Drehzahl grösser ist als 500 Upm, vorzugsweise grösser als 1000 Upm ist.

10. Vorrichtung (10) nach Anspruch 8 oder 9, **dadurch gekennzeichnet, dass** die Abrollvorrichtung (12) die beiden Zahnräder (13, 14) so zueinander in einen räumlichen Bezug bringen kann, dass die Körperschallprüfung oder Drehbeschleunigungsmessung und/oder die Einflankenwälzprüfung an einer Anzahl von fest vorgegebenen Einbaupositionen erfolgt.

11. Vorrichtung (10) nach Anspruch 8, 9 oder 10, **dadurch gekennzeichnet, dass** sie eine Normierungsfunktion umfasst, die es erlaubt, die Messergebnisse von Körperschallprüfungen oder Drehbeschleunigungsmessungen, die auf verschiedenen Vorrichtungen ermittelt wurden unter Verwendung einer Einflankenwälzprüfung zu normieren.

## Claims

1. Method for testing the running behavior of the engaged gearwheels (13, 14) of a gearwheel pair or wheelset, a structure-borne noise measurement or rotational acceleration measurement being performed in different installation positions of the gearwheels (13, 14) during a rotation of the gearwheels (13, 14) on the basis of a structure-borne noise sensor (20), **characterized in that**
- a specific installation position is ascertained from measurement results of the structure-borne noise test or rotational acceleration measurement, which position meets at least one predefined structure-borne noise criterion in regard to the running behavior,
- a single-flank roll test is performed using a revolution sensor system (23, 24) in the specific installation position of the gearwheels (13, 14) of the same gearwheel pair,
- a quantitative analysis of measurement results of the single-flank roll test is performed, and
- it is determined using a single-flank generating criterion whether the running behavior of the gearwheels (13, 14) corresponds to a requirement.

2. Method according to claim 1, **characterized in that** a suitable installation position is determined on the basis of the structure-borne noise test or rotational acceleration measurement, and the single-flank roll test is only performed at this installation position to establish that the requirement is maintained.

3. Method according to claim 1 or 2, **characterized in that** the installation position of the gearwheels (13, 14) is continuously changed in relation to one another during the structure-borne noise test or rotational acceleration measurement executed using the structure-borne noise sensor (20) and the installation position and output signals of the structure-borne noise sensor (20) are detected in a time-synchronous manner and stored to allow an assignment between the measurement results of the structure-borne noise test or rotational acceleration measurement and the particular installation positions.

4. Method according to claim 1 or 2, **characterized in that** the structure-borne noise test or rotational acceleration measurement executed using the structure-borne noise sensor (20) is performed at discrete installation positions of the gearwheels (13, 14) and the measurement results of the structure-borne noise test or rotational acceleration measurement are analyzed to establish an approximation of the structure-borne noise criterion, a transition from a discrete structure-borne noise measurement or rotational acceleration measurement to a continuous structure-borne noise measurement or rotational acceleration measurement occurring from the installation position is thus ascertained.

5. Method according to one of claims 1 through 4, **characterized in that** the position of the specific installation position is more precisely ascertained on the basis of the single-flank roll test at the specific installation position of the gearwheels (13, 14) than was possible on the basis of the measurement results of the structure-borne noise test or rotational acceleration measurement.

6. Method according to one of claims 1 through 5, **characterized in that** a standardization step is performed on the basis of at least one measurement result of the structure-borne noise test or rotational acceleration measurement at or in the range of the specific installation position to make measurement results of a structure-borne noise test or rotational acceleration measurement on various structure-borne noise measurement systems or devices comparable.

7. Method according to one of claims 1 through 6, **characterized in that** a number of installation positions are permanently predefined and measurement results of the structure-borne noise test or rotational acceleration measurement and/or of measurement results of the single-flank roll test are correlated to the permanently predefined installation positions to ascertain the best suitable installation position from the number of permanently predefined installation positions.

8. Device (10) for measuring the running behavior of a gearwheel pair or wheelset having a rolling device (12) which comprises one spindle (15, 16) per gearwheel (13, 14) and has at least one drive (17; 18) for driving one of the gearwheels (13, 14), a structure-borne noise sensor (20) and a process controller (30) being provided, **characterized in that**
the device (10) also comprises a revolution sensor system (23, 24) and a process controller (30) is designed in such a way that a combined test of the gearwheels (13, 14) may be performed, in which, in a first search run, a specific installation position is determined using structure-borne noise testing or rotational acceleration measurement and subsequently a single-flank roll test is performed at the specific installation position.

9. Device (10) according to claim 8, **characterized in that** the drive (17; 18) is designed in such way that at least one of the gearwheels (13, 14) is driven at a first speed during the structure-borne noise test or rotational acceleration measurement and at least one of the gearwheels (13, 14) is driven at a second speed during the single-flank roll test, the second speed being in the range from 10 to 1000 rpm, preferably 30 to 200 rpm, and the first speed being greater than 500 rpm, preferably greater than 1000 rpm.

10. Device (10) according to claim 8 or 9, **characterized in that** the rolling device (12) may bring the two gearwheels (13, 14) into a spatial relationship to one another in such a way that the structure-borne noise test or rotational acceleration measurement and/or the single-flank roll test is performed at a number of permanently predefined installation positions.

11. Device (10) according to claim 8, 9, or 10, **characterized in that** it comprises a standardization function which allows the measurement results of structure-borne noise tests or rotational acceleration measurement, which have been determined on various devices, to be standardized using a single-flank roll test.

## Revendications

1. Procédé de contrôle de la qualité de fonctionnement de roues dentées (13, 14) d'une paire de roues dentées ou d'un jeu de roues qui se trouvent en contact, dans lequel pendant une rotation des roues dentées (13, 14), on exécute au moyen d'un détecteur de bruit de structure (20) un contrôle de bruit de structure ou une mesure de l'accélération de rotation selon différentes positions de montage des roues dentées (13, 14), **caractérisé en ce que**
- on détermine, à partir des résultats de mesure du contrôle de bruit de structure ou de la mesure de l'accélération de rotation, une position de montage spécifique qui remplit au moins un critère de bruit de structure prédéfini eu égard à la qualité de fonctionnement,
- au moyen d'une analyse sensorielle de vitesse de rotation (23, 24), on exécute un contrôle de roulement d'un seul flanc pour la position de montage spécifique des roues dentées (13, 14) de cette paire de roues dentées,
- on entreprend une évaluation quantitative des résultats de mesure du contrôle de roulement d'un seul flanc, et
- **en ce qu'**en utilisant un critère de roulement d'un flanc, on détermine si la qualité de fonctionnement des roues dentées (13, 14) correspond à une spécification.

2. Procédé selon la revendication 1, **caractérisé en ce qu'**au moyen du contrôle de bruit de structure ou d'une mesure de l'accélération de rotation, on détermine une position de montage appropriée et **en ce que** le contrôle de roulement d'un seul flanc est uniquement exécuté dans cette position de montage pour constater le respect de la spécification.

3. Procédé selon la revendication 1 ou 2, **caractérisé en ce que** pendant le contrôle de bruit de structure ou la mesure de l'accélération de rotation exécuté au moyen du détecteur de bruit de structure (20), la position de montage des roues dentées (13, 14) l'une par rapport à l'autre est modifiée en continu, et la position de montage comme les signaux de sortie du détecteur de bruit de structure (20) sont enregistrés et mémorisés de façon synchronisée en temps, afin de permettre une coordination entre les résultats de mesure du contrôle de bruit de structure ou de la mesure de l'accélération de rotation et les positions de montage respectives.

4. Procédé selon la revendication 1 ou 2, **caractérisé en ce que** pendant le contrôle de bruit de structure ou la mesure de l'accélération de rotation exécuté au moyen d'un détecteur de bruit de structure (20), la position de montage des roues dentées (13, 14) est réalisée au niveau de positions de montage discrètes et les résultats de mesure du contrôle de bruit de structure ou de la mesure de l'accélération de rotation sont analysés pour constater une approximation du critère de bruit de structure, suite à quoi, à partir de la position de montage ainsi déterminée, il se produit alors un passage d'une mesure de bruit de structure ou d'une mesure de l'accélération de rotation discrète vers une mesure de bruit de structure ou une mesure de l'accélération de rotation continue.

5. Procédé selon l'une des revendications 1 à 4, **caractérisé en ce qu'**au moyen du contrôle de roulement d'un seul flanc, pour la position de montage spécifique des roues dentées (13, 14), on détermine l'emplacement de la position de montage spécifique plus précisément que cela était possible au moyen des résultats du contrôle de bruit de structure ou de la mesure de l'accélération de rotation.

6. Procédé selon l'une des revendications 1 à 5, **caractérisé en ce qu'**au moyen d'au moins un résultat de mesure du contrôle de bruit de structure ou de la mesure de l'accélération de rotation au niveau de ou dans la zone de la position de montage spécifique, on réalise une étape de normalisation pour rendre comparables les résultats de mesure des contrôles de bruit de structure ou de la mesure de l'accélération de rotation sur différents systèmes ou appareils de mesure de bruit de structure.

7. Procédé selon l'une des revendications 1 à 6, **caractérisé en ce qu'**un nombre de positions de montage est prédéfini et **en ce qu'**on réalise une corrélation des résultats de mesure du contrôle de bruit de structure ou de la mesure de l'accélération de rotation et/ou des résultats de mesure du contrôle de roulement d'un seul flanc aux positions de montage prédéfinies, afin de déterminer la position de montage la plus appropriée à partir du nombre des positions de montage prédéfinies.

8. Dispositif (10) de mesure de la qualité de fonctionnement d'une paire de roues dentées ou d'un jeu de roues avec un dispositif de défilement (12) qui comprend par roue dentée (13, 14) une broche (15, 16) et au moins un entraînement (17, 18) pour entraîner une des roues dentées (13, 14), dans lequel sont prévus un détecteur de bruit de structure (20) et une commande séquentielle (30), **caractérisé en ce que** le dispositif (10) comprend de plus une analyse sensorielle de la vitesse de rotation (23, 24), et **en ce qu'**une commande séquentielle (30) est exécutée de façon telle que l'on peut exécuter un contrôle combiné des roues dentées (13, 14) dans lequel, lors d'une première phase de recherche, on détermine au moyen d'un contrôle de bruit de structure ou d'une mesure de l'accélération de rotation une position de montage spécifique, et on réalise ensuite avec la position de montage spécifique un contrôle de roulement d'un seul flanc.

9. Dispositif (10) selon la revendication 8, **caractérisé en ce que** l'entraînement (17, 18) est exécuté de façon telle que pendant le contrôle de bruit de structure ou la mesure de l'accélération de rotation, au moins une des roues dentées (13, 14) est entraînée avec une première vitesse de rotation et **en ce que** pendant le contrôle de roulement d'un seul flanc, au moins une des roues dentées (13, 14) est entraînée avec une seconde vitesse de rotation, la seconde vitesse de rotation étant dans la gamme de 10 à 1 000 tours par minute, de préférence de 30 à 200 tours par minute, et la première vitesse de rotation étant supérieure à 500 tours par minute, de préférence supérieure à 1 000 tours par minute.

10. Dispositif (10) selon la revendication 8 ou 9, **caractérisé en ce que** le dispositif de défilement (12) peut amener les deux roues dentées (13, 14) l'une par rapport à l'autre dans un rapport spatial tel que le contrôle de bruit de structure ou la mesure de l'accélération de rotation et/ou le contrôle de roulement d'un seul flanc se fait sur un nombre de positions de montage prédéfinies.

11. Dispositif (10) selon la revendication 8, 9 ou 10, **caractérisé en ce qu'**il comprend une fonction de normalisation qui permet de normaliser le résultat de mesure des contrôles de bruit de structure ou de la mesure de l'accélération de rotation qui ont été déterminés par différents dispositifs en utilisant un contrôle de roulement d'un seul flanc.
